(19) Europäisches Patentamt / European Patent Office / Office européen des brevets

(11) **EP 3 173 752 A1**

(12) **EUROPEAN PATENT APPLICATION**

(43) Date of publication:
**31.05.2017 Bulletin 2017/22**

(51) Int Cl.:
**G01H 9/00** *(2006.01)*  **G01P 15/02** *(2013.01)*
**G01V 1/18** *(2006.01)*

(21) Application number: **15196716.3**

(22) Date of filing: **27.11.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Université Libre de Bruxelles
1050 Bruxelles (BE)**

(72) Inventors:
• **Collette, Christophe
  4130 ESNEUX (BE)**
• **Francqui, Filip
  1030 Bruxelles (BE)**
• **Fueyo, Lionel
  1700 DILBEEK (BE)**

(74) Representative: **Pronovem
  Office Van Malderen
  Avenue Josse Goffin 158
  1082 Bruxelles (BE)**

(54) **TRANSDUCER WITH STIFFNESS ADJUSTMENT**

(57)    Transducer (60), comprising a mount (61) and a mass-spring system including a seismic mass (62) and a first elastic coupling (631,632) between the mount and the seismic mass. The seismic mass (62) is configured to oscillate relative to the mount (61) along a sensing axis (224). The transducer further comprises a stiffness adjustment means (66) operable to adjust a stiffness of the mass-spring system. The stiffness adjustment means comprises a member (661, 661') which forms a second elastic coupling between the mount (61) and the seismic mass (62). The stiffness adjustment means further comprises preloading means (67) operable for applying a preload to the second elastic coupling, which, when preloaded, operates to adjust the stiffness of the mass-spring system.

FIG 6

## Description

The present invention is related to the field of transducers, in particular inertial sensors, such as accelerometers. More particularly, the present invention is related to mass-spring accelerometers having an improved sensitivity, in particular by adjusting the stiffness of the mass-spring system.

There is an increased demand for accelerometers in various applications, such as oil and mining prospection, diagnostic monitoring of machines, geophysics, wind turbines, etc. Each application sets its own requirements and therefore accelerometers must be adapted to custom specifications. One such requirement is that different applications need different accelerometer sensitivity. Another requirement is size reduction. Yet another requirement is cost reduction, in particular where large numbers of accelerometers are used.

The sensitivity of an accelerometer is determined not only by the inherent structure of the mass-spring system. By way of example, the use of an accelerometer in environmental conditions with large temperature excursions introduces a temperature noise on the accelerometer output which negatively influences sensitivity.

To cope with the above problems, a number of accelerometer designs have been proposed. Basumallick N. et al., Fiber Bragg grating accelerometer with enhanced sensitivity, Sensors and Actuators A, 2012 Vol. 173, pages 108-115 describe a cantilever-based optical accelerometer of which the sensitivity has been improved by tailoring the effective distance between the sensor axis to the neutral axis of the cantilever.

US 2006/0236762 to Meyer, 26.10.2006 describes a seismic mass suspended in a housing by elastic support members. In addition, an optical fibre is connected between the seismic mass and opposite sidewall portions of the housing, such that displacement of the seismic mass along a sensing axis elongates a first portion of the optical fibre and shortens another portion. Fibre Bragg gratings are provided in both portions and are alternately placed into tension and compression. This increases the sensitivity of the accelerometer by 2 over that using a single fibre Bragg grating. In WO 2012/109502 to SIEMENS ENERGY INC, 16.08.2012 the elastic support between the seismic mass and the housing is provided by a membrane. In the latter document, a fibre Bragg grating is provided at one side of the seismic mass only.

Despite the above improved accelerometer designs, there is a continuing need in the art of further improving sensitivity. More particularly, there is a need in the art of providing accelerometers with sensitivity which can be easily adjusted, such that the accelerometer can be easily tailored to the specific application. There is a need in the art of providing accelerometers which can be easily customised to the specific application and which are more economical.

According to a first aspect of the invention, there is therefore provided a transducer, such as an inertial sensor, e.g. an accelerometer, as set out in the appended claims. Transducers according to aspects of the invention comprise a mount and a mass-spring system which includes a seismic mass elastically coupled to the mount through a spring element. The seismic mass is operable to oscillate relative to the mount along a sensing axis.

According to aspects of the invention, the transducers comprise a stiffness adjustment or compensation means (or system) which is configured for adjusting a stiffness of the mass-spring system. The stiffness adjustment means advantageously comprises a second elastic coupling between the mount and the seismic mass. The second elastic coupling has a stiffness which advantageously adds to or subtracts from a stiffness of the elastic coupling of the mass-spring system. According to an aspect, the stiffness adjustment means comprises preloading means operable for applying an advantageously compressive preload to the second elastic coupling. Advantageously, when preloaded, the second elastic coupling operates to adjust, in particular reduce, an overall stiffness of the mass-spring system. The stiffness adjustment is advantageously obtained by suitable orientation of members of the second elastic coupling such that, when preloaded, it is configured for exerting a force directed to oppose a restoring force exerted by the first elastic coupling on the seismic mass. Reducing an overall stiffness allows for increasing a sensitivity of the transducer. Therefore, transducers with varying levels of sensitivity can easily be designed without needing to change the inherent structure of the mass-spring system.

Advantageously, the second elastic coupling is configured for acting in a plane perpendicular to the sensing axis when the seismic mass is in an equilibrium position. Advantageously, the elastic coupling is arranged symmetrically relative to the sensing axis. As a result, in equilibrium position of the seismic mass, there is advantageously no net resulting force acting on the mass, and the first elastic coupling remains unaffected. When seismic mass departs from the equilibrium position, the second elastic coupling creates a resulting force along the sensing axis, advantageously opposing the restoring force by the first elastic coupling on the seismic mass.

According to an advantageous aspect, the preloading means allows for adjusting a level of preload of the second elastic coupling. Since the elastic coupling members will generally be spring-type elements, the level of preload can easily be adjusted, e.g. by changing an elongation of these elements. By so doing, the sensitivity can further be tuned without any change in the design of the transducer. As a result, cost effective transducers which can easily be tailored to custom specifications are obtained.

Methods for measuring vibrations and methods for adjusting a stiffness of the mass spring system of a transducer are described as well.

Aspects of the invention will now be described in more detail with reference to the appended drawings, wherein same reference numerals illustrate same features and wherein:

Figure 1 represents schematically the general structure of an inertial sensor;

Figure 2 represents a perspective view of a cantilever-based accelerometer according to aspects of the invention, which comprises a stiffness compensation system;

Figure 3 represents a plan front view of the accelerometer of figure 2;

Figure 4 represents a perspective view of the cantilever and the seismic mass isolated from the accelerometer of figure 2;

Figures 5 A-B represent a schematic working principle of the accelerometer of figure 2; figure 5A represents the accelerometer in an equilibrium position, whereas figure 5B represents the accelerometer in a position deviating from equilibrium;

Figure 6 represents a plan view of another accelerometer according to aspects of the invention, wherein the seismic mass is suspended with an optical fibre;

Figure 7 represents a cross-sectional view of yet another accelerometer according to aspects of the invention;

Figure 8 represents a perspective partial cut-out view of the accelerometer of figure 7;

Figure 9 represents a vertical cross-sectional view of yet another accelerometer according to aspects of the invention;

Figure 10 represents an exploded perspective view of the accelerometer of figure 9;

Figure 11 represents a cross-sectional view of the accelerometer of figure 9 in a plane perpendicular to the section plane of figure 9 (top view);

Figure 12 represents an FBG interrogator system for use in transducers according to the invention;

Figure 13 represents a graph with the outputs of experiment A in terms of wavelength shift versus time for a prototype of an accelerometer according to figure 2 without applying preload (P1) and for a commercial FBG-based single axis accelerometer (FS65);

Figure 14 represents a graph with the outputs of experiment B in terms of wavelength shift versus time for the same prototype of figure 13 with a preload applied (P2) and for the same commercial accelerometer of figure 13.

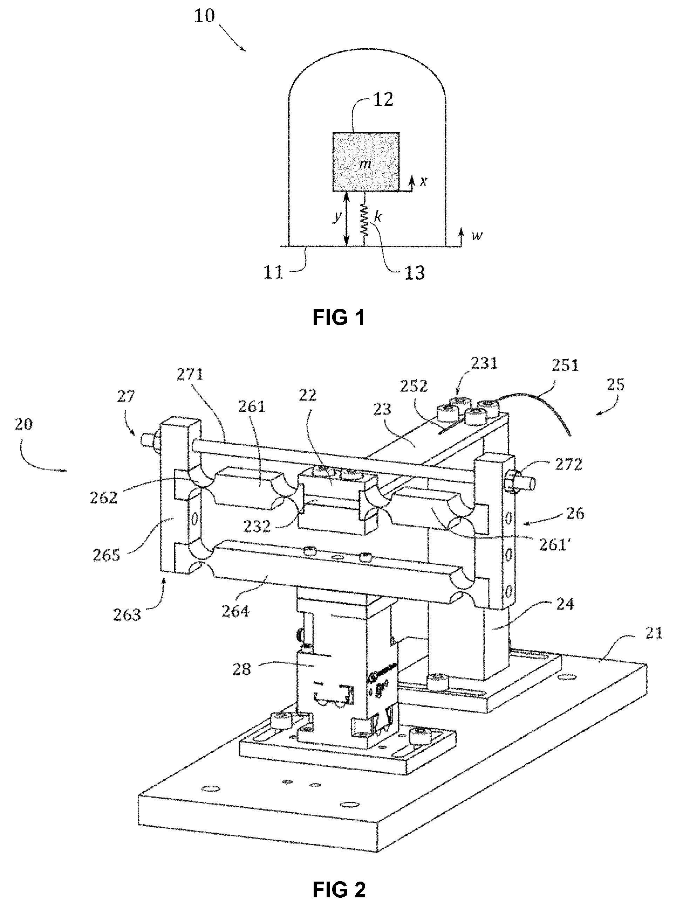

Aspects of the invention relate to transducers, in particular inertial sensors. Inertial sensors are configured for measuring a motion of an object, in terms of displacement, speed or acceleration. Figure 1 depicts the general structure of an inertial sensor 10. A mass 12 is elastically mounted with respect to a mount 11 through a spring element 13. The mount 11 is firmly secured to the object of which the motion is to be measured and therefore will constitute the reference surface of motion. The mass 12 forms the active element of the inertial sensor 10. As mass 12 is configured to move or vibrate relative to the reference surface, it is referred to as the seismic mass. A motion (e.g. displacement w) of the reference surface 11 will cause a motion (e.g. displacement x) of the mass 12 whose dynamics are governed by the spring constant $k$ of the spring element 13 and the mass m of 12. Knowledge of $k$ and m allows for extracting the relative motion $y$ between the mass 12 and reference 11, and, hence, the motion w. In a Bode diagram one can see that the transmissibility curve between the relative displacement $y$ and the acceleration w of the reference 11 is flat for frequencies far lower than the natural frequency $\omega_0 = \sqrt{\dfrac{k}{m}}$ of the mass-spring system 12, 13.

Accelerometers are a class of inertial sensors which are configured to measure motion in the frequency range below $\omega_0$, e.g. a frequency range smaller than or equal to $0.1 \times \omega_0$. Even though the following embodiments will be described in terms of accelerometers, it will be apparent that aspects of the invention may readily be adapted by those skilled in the art to other classes of transducers

Aspects of the present invention relate to improving the sensitivity of the above transducers (e.g. inertial sensors, vibration sensors). In accordance with aspects of the invention, a stiffness compensation system is introduced which acts to reduce the overall stiffness of the mass-spring system of the transducer. Reducing the overall stiffness will reduce the natural frequency of the mass-spring system of the transducer, thereby increasing sensitivity towards transmissibility between the relative displacement $y$ and the acceleration w. Aspects of the invention relate to introducing a negative stiffness system which adds to the stiffness $k$ and thereby reduces the overall stiffness. In an advantageous aspect, the negative stiffness can be adjusted allowing for tailoring the natural frequency of the mass-spring system and hence the transducer's sensitivity to desired specifications.

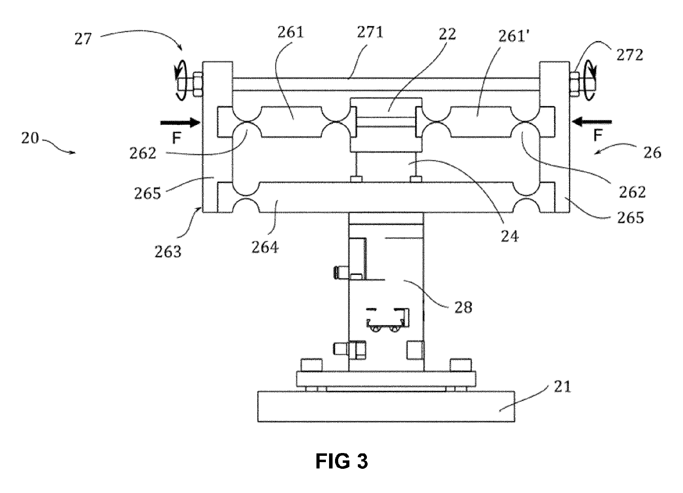

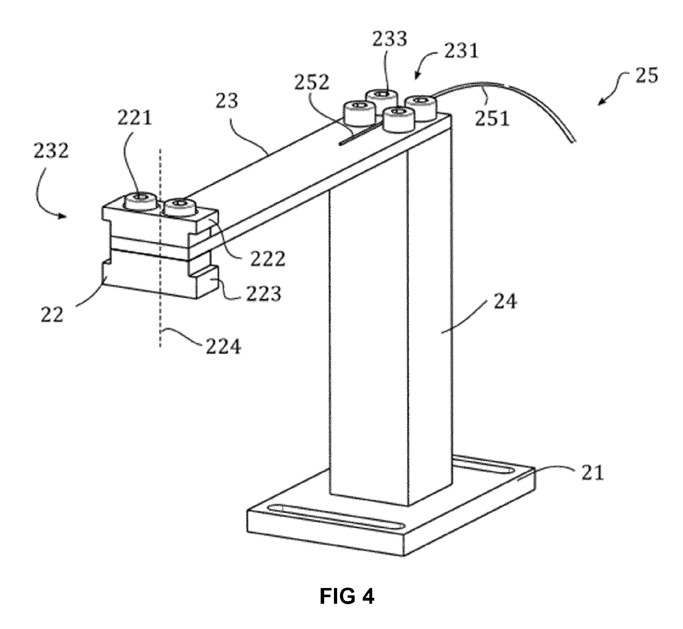

Figures 2 and 3 show a first accelerometer 20 according to aspects of the invention. Accelerometer 20 is of a cantilever type, the mass-spring system of which is shown in isolated view in figure 4. The mass-spring system of accelerometer 20 comprises a seismic mass 22 secured at the free end 232 of a cantilever beam 23. In this particular design, seismic mass 22 is formed of two identical masses 222 and 223 which are symmetrically arranged above and below cantilever beam 23 and secured to it e.g. by screws 221. It will be convenient to note that other designs are possible. Cantilever beam 23 is clamped at the opposite end 231, e.g. by screws 233, on a support post 24 which is secured onto mount 21. The cantilever beam 23 acts as a leaf spring suspending seismic mass 22 from the support post 24.

Following motion of mount 21, seismic mass 22 is configured to vibrate relative to the mount 21 along a sensing axis 224. This will cause the cantilever beam to bend in the direction of sensing axis 224 and thereby the fibres of the cantilever beam 23 spaced apart from the neutral axis will experience expansion and contraction.

Possibly, though not necessarily, and assuming small displacements of the seismic mass 22, the sensing axis 224 corresponds to a vertical axis. The accelerometer 20 is advantageously an essentially single axis accelerometer, configured for sensing motion along one axis only (i.e. the sensing axis).

The relative motion of seismic mass 22 can be sensed/measured by any suitable means. One possibility is with an interferometric measurement system, comprising a laser beam directed on a surface of seismic mass 22 (or alternatively of cantilever beam 23), which surface advantageously is perpendicular to the sensing axis 224. Another possibility represented in figures 2 to 4 is with a measurement system 25 comprising an optical fibre 251 including an optical strain detecting means, such as but not limited to a fibre Bragg grating (FBG) 252. The FBG 252 is attached (e.g., with an adhesive bond) on the cantilever beam 23 at a distance from the neutral axis, such that expansion and contraction of the fibres of the beam 23 causes a proportional strain in the FBG 252.

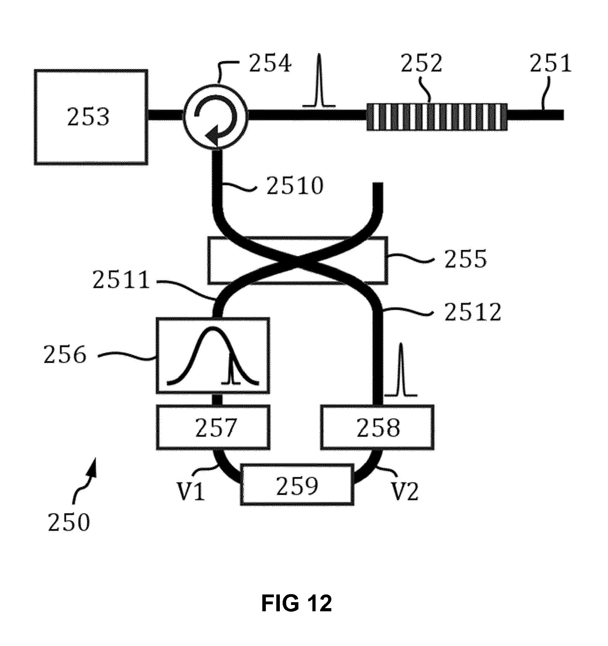

The measurement system 25 advantageously comprises an FBG interrogator connected to the optical fibre 251. One possible FBG interrogator system 250 is represented in figure 12. The system 250 comprises a collimated light source 253 such as a laser, connected to optical fibre 251. Light source 253 emits light through the fibre 251, which is at least partially reflected in the FBG 252. An output coupler 254 is arranged along the fibre path and deviates the reflected light beam 2510. The deviated light beam 2510 passes a beam splitter 255, splitting the beam 2510 into two components. A first component 2511 passes through a linear filter 256, which reduces the luminous intensity (amplitude depending linearly on the wavelength of beam 2511). The second component 2512 remains unfiltered and serves as a reference of the energy content of the beam 2510. Both beams 2511 and 2512 subsequently pass through corresponding photo detectors 257 and 258 which output electric voltage signals V1 and V2 respectively being linear functions of the beam intensity. Voltage signals can subsequently be acquired by a data acquisition device 259 for further processing. A strain experienced by the FBG 252 will cause a wavelength shift in the reflected beam which will be proportional to the ratio V1/V2. It will be convenient to note that other systems can be used to measure the strain of fibre 251, as are known in the art.

In the cantilever design of figure 4, the dynamics of the mass-spring system, and hence the sensitivity of the accelerometer, are determined by the stiffness of the leaf spring formed by cantilever beam 23 and by the mass of 22.

According to aspects of the invention, the accelerometer 20 is provided with a stiffness adjustment or compensation system 26. Stiffness adjustment system 26 comprises a couple of members 261, 261' elastically mounted between seismic mass 22 and the mount 21. Members 261, 261' therefore advantageously provide for an additional elastic coupling between the seismic mass 22 and the mount 21, which adds to the elastic coupling provided by cantilever beam 23.

Different ways of elastically coupling the members 261, 261' between the seismic mass 22 and the mount 21 can be contemplated. One possibility, as shown in figures 2-3 is by providing the members 261, 261', which are shaped as bars or beams, with one or more notches 262 or similar points of weakness. Such points of weakness advantageously act as nodes in members 261, 261' which advantageously assist in elastically deforming the members in a flexural mode which causes an elastic deflection of the members 261, 261' along the sensing axis. It will be convenient to note that such flexural nodes may also be distributed (continuous) along the members, instead of being discrete nodes 262.

Members 261, 261' are advantageously mounted between the seismic mass 22 and a frame 263 of the stiffness adjustment system 26, which is connected to, or can be integral with the mount 21.

A zero adjustment system, such as a positioning table 28 or a linear slide can be coupled between the frame 263 (stiffness adjustment system 26) and the mount 21. Positioning table 28 allows for adjusting the equilibrium position of system 26 relative to seismic mass 22/mount 21, e.g. to have zero deflection at equilibrium.

It will be convenient to note that although the stiffness adjustment system 26 represented in figures 2-3 comprises two symmetrically arranged members 261, 261', this is no requirement, and solutions can be contemplated with only one such member or more than two members, as will be described further below.

In the system 26 shown, the members 261, 261' extend from opposite sides of seismic mass 22 to obtain a symmetrical configuration relative to the sensing axis. The frame 263 can be formed substantially of a C- or U-shape, and can comprise an advantageously horizontal beam 264 connected at its longitudinal ends to advantageously vertical posts 265. The elastically deformable members 261, 261' are connected at one end to the corresponding post 265. As a result, seismic mass 22 and members 261 are interposed between the posts 265.

The zero adjustment system 28 can be coupled between the beam 264 and the mount 21 for easy equilibrium adjustment.

Advantageously, accelerometer 20 comprises a preload system 27 configured for applying a preload to the elastic coupling provided by the stiffness adjustment system 26, e.g. between mount 21 and seismic mass 22. A preload ensures that the elastic force applied on the seismic mass through members 261, 261' will be biased to always apply in a same sense when the seismic mass oscillates about the equilibrium position along the sensing axis. Advantageously, the bias force applies in a sense which counteracts dynamic (elastic) forces in the original mass-spring system.

Preload system 27 can comprise a tension rod 271 which extends between ends of the elastic members 261, 261' and parallel thereto. The tension rod 271 is advantageously offset from the elastic members 261, 261'. By way of example, tension rod 271 extends between the vertical posts 265 and is connected thereto in order to apply a load on the posts 265 which is transmitted to the elastic members 261, 261'. To this end, tension rod 271 can be threaded. Nuts 272 are screwed at opposite ends of the rod 271 against the posts 265. By screwing nuts 272 on rod 271, the posts are forced towards each other, which results in an advantageously compressive preload force F applied on the elastic connection provided by members 261, 261'.

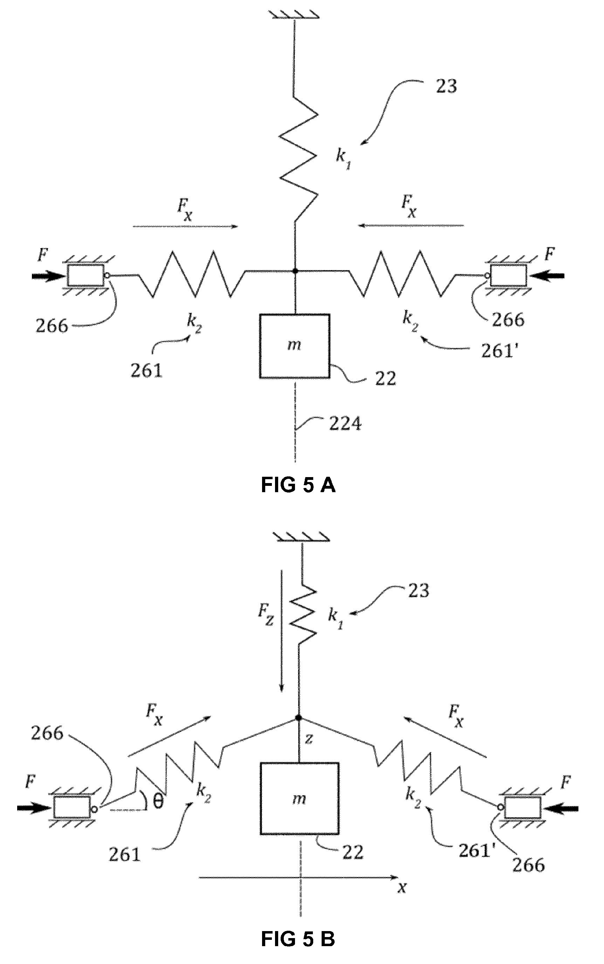

The principle of operation of the preload system will now be explained in relation to figures 5 A-B which schematically represent the elasticities involved in the accelerometer design of figures 2-3. One purpose of the stiffness adjustment and preload system 26, 27 is to introduce a negative stiffness which adds to the stiffness $k_1$ of spring 23. The mass-spring system will therefore experience a reduced overall stiffness. The reduced stiffness is obtained with the stiffness adjustment system 26 adding a number of elastic connections between seismic mass 22 and mount 21 (through members 261, 261'), which can be represented by springs having spring constants $k_2$ (Hooke's Law). The preload system 27 will preload the springs such that they apply a preload force Fx.

Advantageously, the disposition of members 261, 261' is such that in an equilibrium position of seismic mass 22 along the sensing axis 224, as represented in figure 5A, there is no net resulting force by the stiffness adjustment system 26 on the mass-spring system along the sensing axis 224. One possibility of achieving this is to orient the members 261, 261' such that the elastic forces applied by the stiffness adjustment system 26 cancel one another out in equilibrium, at least along the sensing axis. One possibility is to orient the stiffness adjustment system, and members 261, 261' in particular, such that the preload force $F_X$ in equilibrium is oriented perpendicular to the sensing axis 224. Advantageously, the preload forces $F_X$ of each of the members 261, 261' cancel each other out by appropriate arrangement of the members, e.g. by arranging the members symmetrically opposite the seismic mass 22.

Referring now to figure 5B, when seismic mass 22 is made to oscillate and leave its equilibrium position, the preload force Fx will counteract the elastic force Fz exerted by spring $k_1$. The dynamic equation of motion of the mass along sensing axis 224 can be expressed as follows:

$$m\ddot{z} + k_1 z - 2F_x sin\theta = 0$$

where z is the displacement of seismic mass 22 along the sensing axis 224, m the mass of seismic mass 22, $k_1$ the spring constant of cantilever beam 23 according to Hooke's law, $F_x$ the force exerted by the members 261, 261' and $\theta$ is the inclination of the members 261, 261' (with respect to an axis perpendicular to the sensing axis) due to the displacement z. The force $F_x$ can be expressed as:

$$F_x = (l_{x0} - l_x)k_2$$

with $k_2$ the spring (force) constant of member 261/261' according to Hooke's law, $l_{x0}$ the free length of the member, $l_x$ the instant length of the member. For small displacements, the following relationship can be assumed:

$$sin\theta = \frac{z}{l_x}.$$

Replacing the above expressions in the dynamic equation of motion, gives:

$$m\ddot{z} + \left(k_1 - \frac{2(l_{x0} - l_x)}{l_x}k_2\right)z = 0$$

or, with:

$$K = k_1 - \frac{2(l_{x0} - l_x)}{l_x}k_2$$

$$m\ddot{z} + Kz = 0.$$

In compression ($l_x < l_{x0}$), the resulting overall *stiffness K* is always smaller than the stiffness $k_1$ of the cantilever beam.

The above considerations are true only if the stiffness adjustment system 26 adds no stiffness along the vertical axis (224). In figure 5 A-B it is considered that the members 261, 261' flex in a frictionless manner, with perfect (e.g. frictionless) pivots 266. Such ideal springs provide a force only along their axis, and no force is required for flexing the springs over the angle $\theta$. In practice, such as with the prototype of figure 2, however, the members 261 and 261' that play the role of the horizontal springs, add stiffness to the vertical axis, e.g. since the flexural nodes 262 feature a resistance to bending. This resistance can be considered as a spring having stiffness (constant) $k_2^*$ proportional to the displacement z (according to Hooke's law and assuming small displacements). The dynamic equation of motion of the adapted system is:

$$m\ddot{z} + (k_1 + k_2^*)z - 2F_x sin\theta = 0$$

$$m\ddot{z} + \left(k_1 + k_2^* - \frac{2F_x}{l_x}\right)z = 0$$

Where $l_x$ is the distance between the centers of the two notches 262 of members 261 (261'). Even in this case, a suitable preload allows for making the overall stiffness smaller than $k_1$.

Advantageously, the preload system 27 allows for adjusting the level of preload (force) applied to the members 261, 261'. From the above equation for $K$ it can be seen that the length $l_x$ of the member influences the overall stiffness value $K$. In the case of accelerometer 20, by turning nuts 272 on tension rod 271, it is possible to adjust a level of preload on the members 261, 261', which will change a length of members 261, 261'. By so doing, the overall system stiffness, and hence sensitivity of accelerometer 20 can be tuned.

It will be convenient to note that alternative configurations for the stiffness adjustment system, the preload system and the manner of suspending the seismic mass 22 can be contemplated as described below.

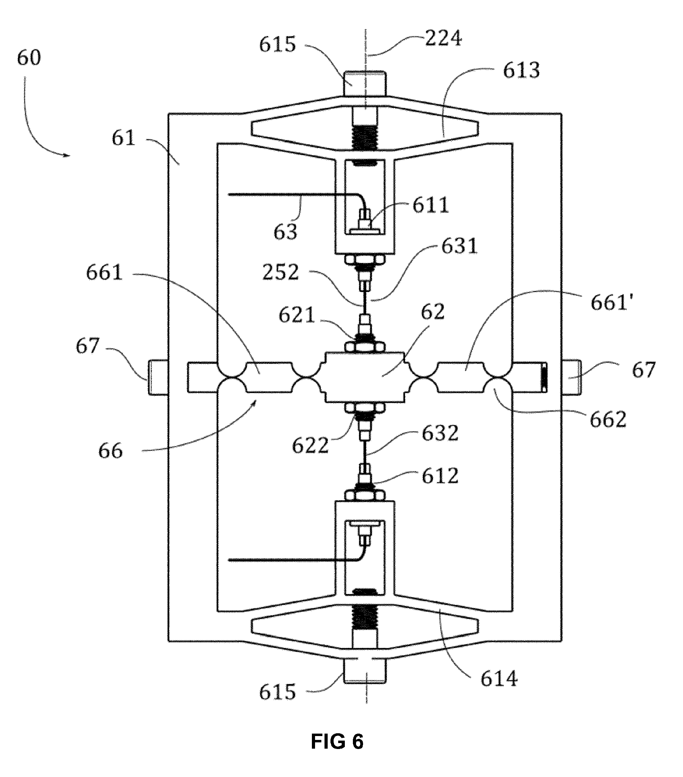

Referring to figure 6, an alternative embodiment of an accelerometer 60 is shown. Accelerometer 60 differs from accelerometer 20 in that seismic mass 62 is suspended by an optical fibre 63 which takes the place of cantilever beam 23 in accelerometer 20. Optical fibre 63 is held at a first position by a first clamp 611 which secures the optical fibre to the mount 61. The optical fibre is additionally held at a second position by a second clamp 621 which secures the optical fibre to the seismic mass 62. By way of example, the optical fibres 63 may be adhesive bonded in a channel of clamp 611 and/or 621 and either one or both clamps may be threadedly connected to the mount 61 and to seismic mass 62 respectively. Possibly, though not necessarily, the fibre suspension arrangement can be made symmetrical with respect to seismic mass 62, along sensing axis 224. In the latter case, as shown in figure 6, optical fibre 63 extends through seismic mass past the opposing side, where a third clamp 622 may be located which is advantageously threadedly connected to the seismic mass 62. The optical fibre 63 may further extend until a fourth clamp 612, which may be identical to first clamp 611 and disposed symmetrically opposite to it relative to seismic mass 62.

Clamps 621 and 622 may be integrally made as a single clamp for securing the optical fibre 63 to the seismic mass 62. Since clamps 611 and 621 on the one hand - and in the symmetrical configuration also clamps 622 and 612 - are spaced apart, one portion 631 or two portions (632) (in the symmetrical case) of optical fibre 63 extend between mount 61 and the seismic mass 62. The elastic properties of the optical fibre in these portions will cause the seismic mass 62 to oscillate along sensing axis 224, in response to a motion of the mount 61. Advantageously, the sensing axis is parallel to the portion(s) 631, 632 of the optical fibre.

Clamps 611, 612 can be mounted on flexible arm portions 613, 614 of mount 61. The position of these flexible arm portions 613, 614 can be adjusted in a direction parallel to the optical fibre portions 631, 632, e.g. along sensing axis 224, to obtain a zero adjustment of the (equilibrium) position of seismic mass 62 and/or a tensioning of the optical fibre in the portions 631, 632. Screws 615 engage the flexible arm portions 613, 614 to adjust and fix their position with respect to mount 61.

Either one or both portions 631, 632 of the optical fibre may be provided with an FBG 252. Since the portions 631, 632 of the optical fibre 63 experience expansion and contraction when the seismic mass 62 is oscillating about its equilibrium position relative to the mount 61, the FBG 252 can be used for measuring this displacement/motion. To this end, the optical fibre 63 advantageously extends past either one or both the mount clamps 611, 612 to an FBG interrogator (not shown).

The stiffness adjustment system 66 is similar to the system 26 of accelerometer 20, and comprises two members 661, 661' symmetrically extending from seismic mass 62 to mount 61 along a direction which is perpendicular to the sensing axis 224. The members 661, 661' are provided with notches 662 making the members act as springs, in particular flexural mode or leaf springs.

The preload system is provided here in the form of one or more screws 67 engaging the mount 61 and member 661 at an end thereof. Screws 67 are configured to apply a preload to the members 661, 661', e.g. put the members under a compressive stress. The preload force advantageously acts in a direction parallel to an axis of the members. Preload system 67 and stiffness adjustment system 66 act to form a negative stiffness system similar to systems 26-27 of accelerometer 20, exerting a force to the oscillating seismic mass 62 that will oppose the restoring force of the fibre 63. Since the level of preload is adjustable by turning the screws 67, the overall stiffness can be adapted, which tunes the sensitivity of the accelerometer.

It will be convenient to note that seismic mass 62 and members 661 may be made integrally.

Mount 61 is represented as a rectangular frame enclosing the seismic mass 62, the members 661 and the optical fibre portions 631, 632. In case of an asymmetrical set up, either one of the optical fibre portions 631 or 632 is omitted and the rectangular frame may be replaced by a U-shaped frame.

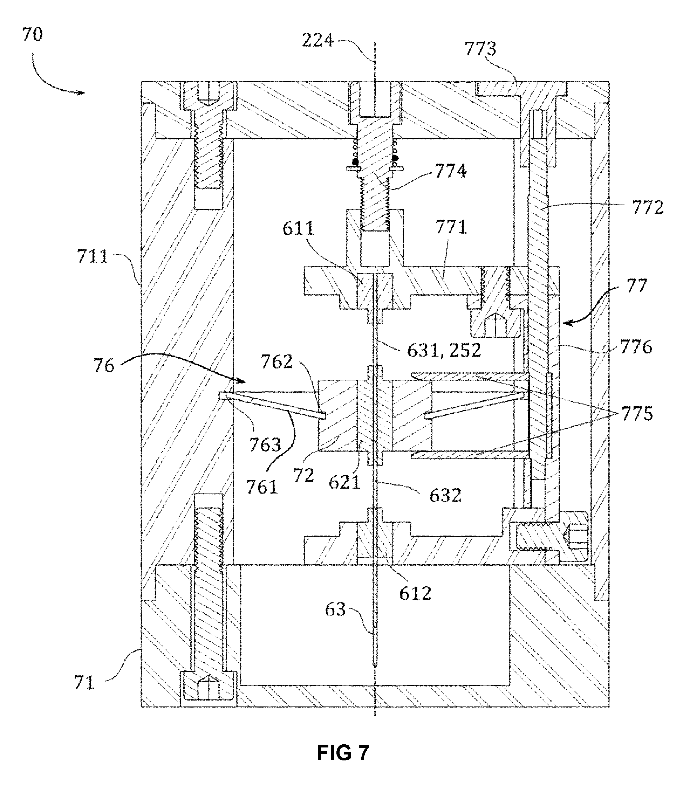

Yet another accelerometer according to aspects of the invention is shown in relation to figures 7-8. Accelerometer 70 differs from accelerometer 60 in that the stiffness adjustment system 76 comprises a Belleville washer 761 (i.e. a coned-disc spring) instead of members 661. Whereas previous stiffness adjustment systems 26, 66 had an essentially 2-D geometry, the Belleville washer has a 360° symmetry about the sensing axis 224. As with accelerometer 60, the seismic mass 72 of accelerometer 70 is suspended with an optical fibre 63 which is clamped to the seismic mass with mass clamp 621. The optical fibre is further clamped to a frame 771 with mount clamps 611 and 612 so that portions 631, 632 of optical fibre suspended between the mount clamps 611, 612 and the mass clamp 621 are oriented along sensing axis 224. An FBG 252 can be arranged in either one or both portions 631, 632 of optical fibre. In operation, frame 771 is fixed to mount 71 and the seismic mass 72 is arranged to oscillate along sensing axis 224 in response to a vibration/motion of mount 71 due to the elastic properties of the optical fibre in portions 631, 632. The FBG 252 in either one or both suspended portions 631, 632 allows for measuring the displacement/motion of the seismic mass 72 relative to mount 71 as the portions 631, 632 will experience expansion and contraction when the seismic mass oscillates.

The accelerometer 70 comprises a preload system 77 that is configured to preload the Belleville washer 761, in particular by elastically deforming it to an unstable, e.g. flat, shape. The Belleville washer 761 is secured at its inner rim 762 to seismic mass 72 and at its outer rim 763 to a cylindrical housing 711 fixed on mount 71. The frame 771, from which seismic mass 72 is suspended through the optical fibre 63, is adjustable relative to the cylindrical housing 711, e.g. along the sensing axis 224. To this end, an adjustment screw 774 or any other adjustment mechanism can be used to adjust a relative position of frame 771 relative to housing 711 (and mount 71). Frame 771 can comprise members 776 arranged to slide in axial grooves 712 of housing 711. These members 776 and grooves 712 may act as linear guides for adjusting the relative position of frame 771 relative to housing 711 along sensing axis 224. Alternatively, or in addition, members 776 and grooves 712 prevent any rotation of frame 771 relative to housing 711 about the sensing axis 224. Turning adjustment screw 774 allows for moving frame 771, and, together with it, the inner rim 762 of Belleville washer 761, along the sensing axis 224. Since the position of outer rim 763 of the Belleville washer 761 remains fixed, a suitable preload can be given to the Belleville washer 761.

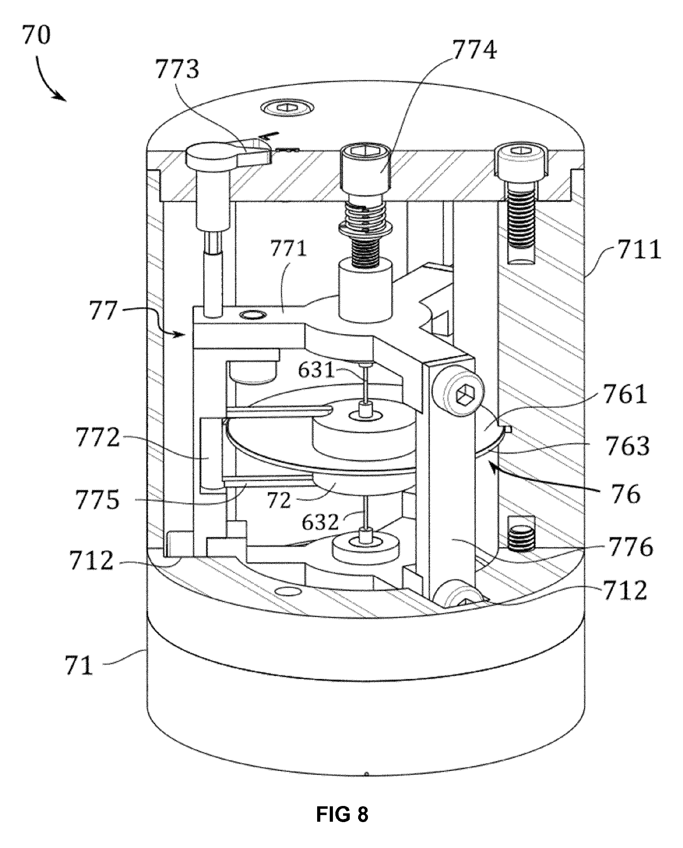

A blocking mechanism for momentarily securing the seismic mass 72 to the frame 771 is advantageously provided in order to protect the optical fibre 63 from excessive strain when preloading the Belleville washer. The blocking mechanism may comprise a grasper 775 to fixedly hold the seismic mass 72. Grasper 775 is fixed to arm 772, which is pivotally coupled to frame 771. Arm 772 can pivot on its axis (parallel to axis 224) relative to frame 771, but cannot move axially relative to the frame. Hence, when the relative position of frame 771 is adjusted with screw 774, the axial position of arm 772 and grasper 775 moves integral with the frame. The pivotal degree of freedom of the grasper and arm assembly allows it to assume two different rotational positions. A first rotational position of arm 772 is to be assumed when preloading the Belleville washer 761, and is shown in figures 7 and 8. In this position, grasper 775 engages the seismic mass 72. Since the arm and grasper are axially fixed to the frame 771, the grasper 775 locks the axial position of seismic mass 72 relative to frame 771, such that adjusting screw 774 will pull directly on the seismic mass 72 and the Belleville washer 761, but not on the optical fibre portions 631, 632. A second rotational position (not shown) is to be assumed during operation. In this second position, the grasper 775 is disengaged from seismic mass 72, allowing seismic mass 72 to oscillate relative to frame 771, and hence relative to mount 71. A lever 773 operably connected to arm 772 allows for switching between the two rotational positions.

Forcing the Belleville washer 761 to an unstable position preloads it. Once preloaded, and with the seismic mass being released from grasper 775, the Belleville washer 761 will exert a force to seismic mass 72 which will oppose the restoring force of the optical fibre 63. This decreases the vertical stiffness of the oscillator, thus increasing the sensitivity of the accelerometer 70. It will be appreciated that the level of preload can be adjusted in the accelerometer 70, by adjusting the position of frame 771 relative to housing 711, which allows for tuning the accelerometer's sensitivity.

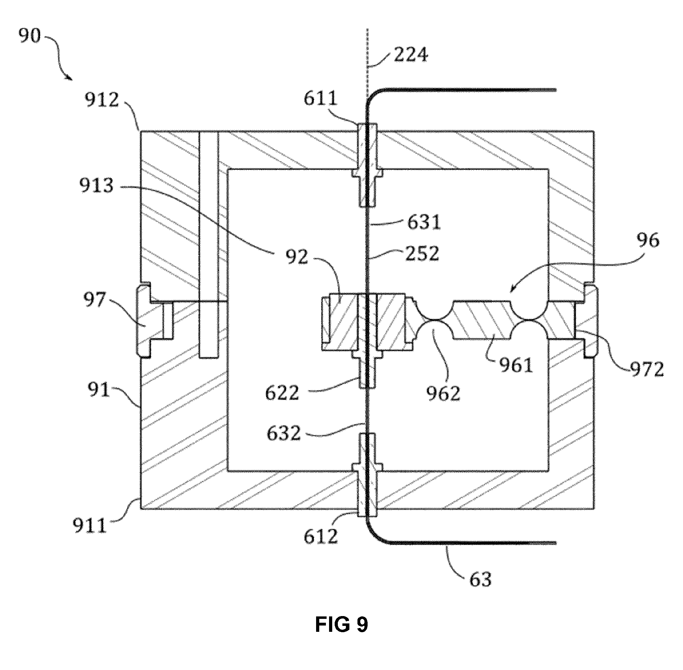

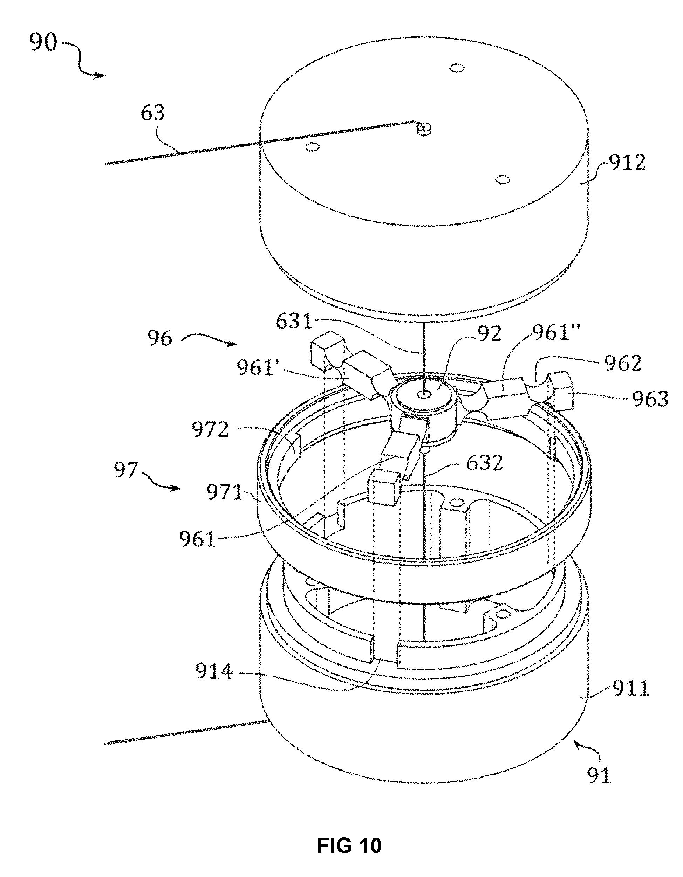

Still another embodiment of an accelerometer 90 according to aspects of the invention is presented in relation to figures 9-11. Accelerometer 90 comprises a mount 91 formed of a bottom cup 911. A top cover 912 closes cup 911 to form a housing defining an inner volume 913 in which seismic mass 92 is arranged. Similar to accelerometer 60, seismic mass 92 is linked to an optical fibre 63 through a clamp 622. The optical fibre 63 may extend along a sensing axis 224 (e.g., a vertical axis) to either one or both sides of the seismic mass 92, where it is fixed to mount 91 through clamps 611 and/or 612. An FBG 252 in either one or both suspended portions 631, 632 of the optical fibre 63, between clamps 622 and 611, 612 allows for measuring the displacement/motion of the seismic mass 92 relative to mount 91 as the portions 631, 632 will experience expansion and contraction when the seismic mass oscillates.

The stiffness adjustment system 96 differs from the stiffness adjustment system 66 in that it comprises three members 961, 961', 961" which elastically connect the seismic mass 92 with mount 91. The members 961, 961', 961" may be identical to one another and each member may be formed similarly to the members 661, 661' of system 66, e.g. with flexural deflection nodes 962 providing for flexural deflection on an axis perpendicular to the sensing axis 224. Members 961, 961', 961" extend radially from seismic mass 92 in a plane advantageously perpendicular to the sensing axis 224, and advantageously with uniform angular spacing, e.g. at 120° intervals. The ends 963 of members 961, 961', 961" opposite the seismic mass are received in recesses 914 in the housing of mount 91 which allow for locking their angular positions about axis 224.

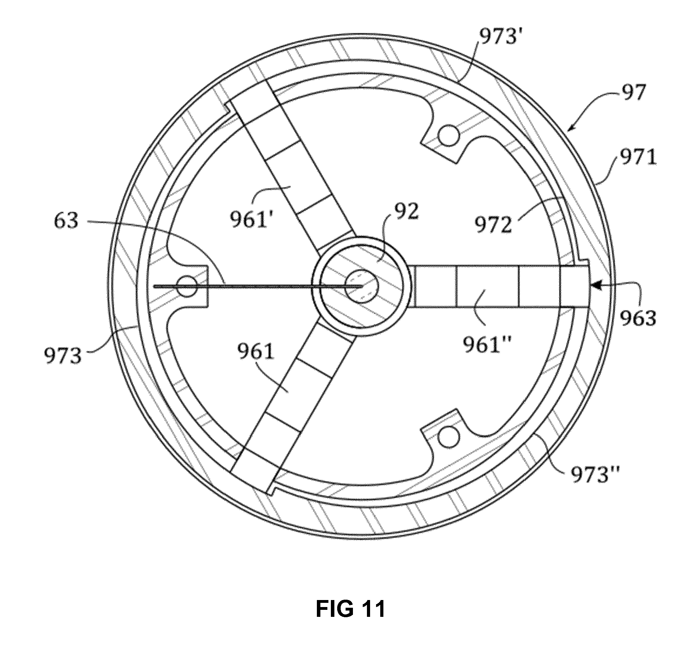

The preload system 97 is alternative to and fully interchangeable with the preload systems 27, 67 of accelerometers 20 and 60. It comprises a ring 971 which can be rotated in the plane of members 961, 961', 961" (perpendicular to the sensing axis 224). The ring 971 has an inner face 972 which abuts against end faces of the members 961, 961', 961" at ends 963. Inner face 972 is divided in three sections 973, 973', 973" corresponding to each of the members 961, 961', 961" respectively. Each section has a variable inner diameter, such that when the ring 971 is turned on its axis (e.g., about the sensing axis 224) a preload is applied to the members 961, 961', 961". Referring to figure 11, turning ring 971 counterclockwise, will apply an equal and increasing preload to the members 961, 961', 961" as the inner diameter of each section 973, 973', 973" is reduced. In the plane of members 961, 961', 961", the preload forces will cancel one another out. When the seismic mass 92 deviates from its equilibrium position along the sensing axis 224, the preload forces will oppose the restoring force in the optical fibre 63. This decreases the stiffness along the sensing axis.

It will be convenient to note that the embodiments presented above are advantageously single axis devices, i.e. configured to measure along one axis only. To measure along multiple axes, a plurality of possibly identical accelerometers can be arranged along mutually perpendicular axes.

In the above examples, the level of preload (force) is easily adjusted by turning screws, nuts, rings, etc. With one and a same accelerometer, varying levels of sensitivity can be obtained, allowing for using the accelerometer for a wide range of applications. The end user hence does not need to buy different kinds of accelerometers. It will be appreciated that such preload adjustment can be automated, e.g. by mounting small electric drives to these adjustment screws, rings, etc. In addition, accelerometers with auto-range sensitivity can be obtained, e.g. as is customary practice with e.g. voltage meters and oscilloscopes.

It will be convenient to note that the FBG 252 in all of the above examples is just an illustrative embodiment of a means for providing a change in a detectable optical property responsive to a change in strain in the optical fibre (e.g. in portions 631, 632). Any provision or means in or at an optical fibre which is able to transform the strain thereof in a detectable optical signal, referred to as optical strain detection means, is eligible for being used in the present invention. By way of example, such optical strain detection means can be one, or a combination of Fibre Bragg gratings, Long-Period fibre gratings, Intrinsic Fabry-Pérot interferometers, Michelson interferometers, Brillouin scattering, Intensity interferometer. A plurality of such optical strain detection means can be provided on a single fibre, at a same or different location. In order to enhance the transducer output, different optical fibres can be provided with different above indicated means. Possibly, strain detection means can be configured to exploit structural slow/fast light, nonlinear phase shift enhancement, or chaotic propagation of light.

**Example**

A prototype accelerometer was built based on the design of figures 2-3. The prototype had the following specifications:

> Seismic mass (22): 15 g
> Cantilever beam (23): aluminium; free length 100 mm; thickness 3 mm; width 20 mm Preload members (261, 261'): aluminium; square cross section (10 mm side length);
> distance between notch centres: 29.5 mm; radius of notches (262): 4.75 mm; distance between notch centres at opposite sides of the seismic mass: 39.75 mm
> FBG (252): distance of FBG from neutral axis of cantilever beam (23): 1.6 mm; distance from beam clamping: approx. 6 mm
> Natural (resonance) frequency of the system (no preload): about 200 Hz

The prototype was fixed on a soft-mounted (damped) table next to a commercial FBG-based single-axis optical accelerometer (FiberSensing FS65™, HBM GmbH, Germany) and the optical fibres of both devices were each connected to an input channel of a commercial FBG interrogator (FBG Scan 804D™, FBGS, Belgium) in order to have the interrogator scan the wavelength reflected by the FBG within each device simultaneously. Two experiments were made; in both experiments, the output of the prototype was compared with the output of the commercial accelerometer.

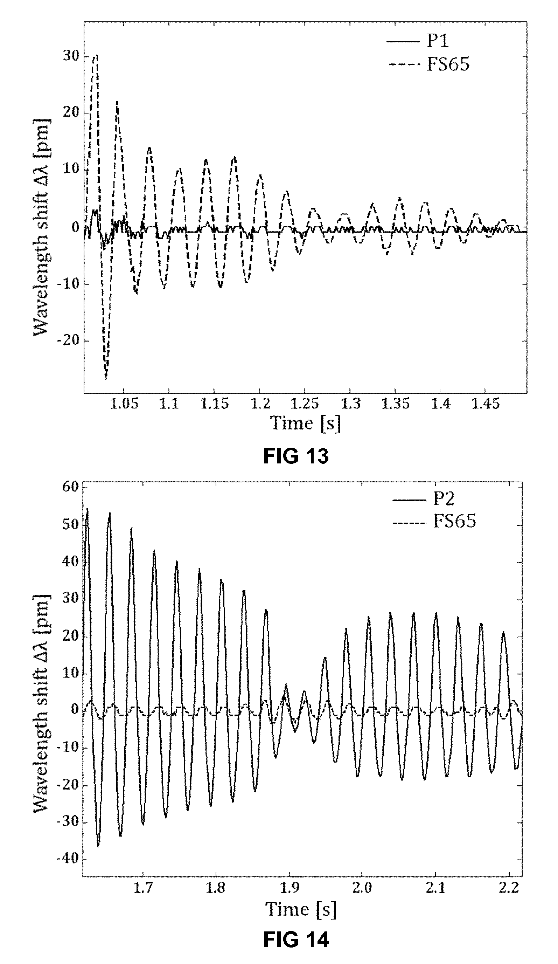

In a first, comparative experiment (experiment A), no preload force was applied by the preload system to the stiffness adjustment system, by untightening nuts 272 (see fig. 3). An oscillation was imparted to the table, resulting from a one-time impact force, causing the seismic masses within the devices to oscillate and causing a wavelength shift in the FBG. The output of the FBG interrogator is shown in figure 13, in which 'FS65' represents the output of the commercial accelerometer, and 'P1' the output of the prototype. One can see that the output P1 of the prototype without preload has a much lower sensitivity (about factor 10 lower) compared to the commercial accelerometer.

In a second, invention experiment (experiment B), a compressive preload of about 100 N for each member 261, 261' was applied by tightening nuts 272. This preload decreased the natural frequency of the system to about 30 Hz. An oscillation similar as with experiment A was imparted to the table. The output of the FBG interrogator is shown in figure 14, in which 'FS65' represents the output of the commercial accelerometer, and 'P2' the output of the prototype. One can see that the output P2 of the prototype with preload applied has a sensitivity which is much higher (approximately a factor 20 higher) compared to the commercial accelerometer. Since the sensitivity of the commercial FS65 accelerometer remained unaltered between the two experiments A and B, one can deduce that the stiffness adjustment and preloading according to aspects of the invention allows for tuning the accelerometer's sensitivity within a range of a factor of approximately 200 or more (e.g. between 1/10 and 20 relative to a standard accelerometer).

**Claims**

1. Transducer (20, 60, 70, 90), comprising:

   a mount (21, 61, 71, 91),
   a mass-spring system, comprising a seismic mass (22, 62, 72, 92) and a first member (23, 631, 632) which forms a first elastic coupling between the mount and the seismic mass, wherein the seismic mass is configured to oscillate relative to the mount along a sensing axis (224),
   **characterised in that**:
   the transducer comprises a stiffness adjustment means (26, 66, 76, 96) operable to adjust a stiffness of the mass-spring system,
   wherein the stiffness adjustment means comprises a second member (261, 261', 661, 661', 761, 961, 961', 961") which forms a second elastic coupling between the mount (21, 61, 71, 91) and the seismic mass (22, 62, 72, 92),
   wherein the stiffness adjustment means comprises preloading means (27, 67, 77, 97) operable for applying a preload (F) to the second elastic coupling, wherein the second elastic coupling, when preloaded, operates to adjust the stiffness of the mass-spring system.

2. Transducer of claim 1, wherein the second elastic coupling, when preloaded, is configured for exerting a force (Fx) directed to oppose a restoring force (Fz) exerted by the first elastic coupling on the seismic mass (22, 62, 72, 92).

3. Transducer of claim 1 or 2, wherein the preloading means (27, 67, 77, 97) comprises means (272, 67, 774, 973, 973', 973") for adjusting a level of preload of the second elastic coupling.

4. Transducer of any one of the preceding claims, wherein the second member (261, 261', 661, 661', 761, 961, 961', 961 ") extends symmetrically with respect to the seismic mass obtaining a symmetrical second elastic coupling with no net resulting force on the seismic mass in an equilibrium position of the mass-spring system.

5. Transducer of any one of the preceding claims, wherein the preload is compressive.

6. Transducer of any one of the preceding claims, wherein the second member (261, 261', 661, 661', 761, 961, 961', 961") extends between the seismic mass (22, 62, 72, 92) and the mount (21, 61, 71, 91) along a direction perpendicular to the sensing axis (224).

7. Transducer of any one of the preceding claims, wherein the second member (261, 261', 661, 661', 761, 961, 961', 961") is configured to bend in response to the seismic mass (22, 62, 72, 92) oscillating relative to the mount (21, 61, 71, 91), and wherein the second elastic coupling is obtained by a bending or flexural mode of the second member.

8. Transducer (20, 60, 90) of any one of the preceding claims, wherein the second member (261, 261', 661, 661', 961, 961', 961") comprises a point of weakness (262, 662, 962) which makes the member flexible along the sensing axis (224).

9. Transducer (20) of any one of the preceding claims, wherein the first member (23) forms a cantilever beam and wherein the seismic mass (22) is mounted at a free end of the cantilever beam (23).

10. Transducer (60, 70, 90) of any one of the claims 1 to 8, wherein the first member (631, 632) extends substantially parallel to the sensing axis (224) between the mount (61, 71, 91) and the seismic mass (62, 72, 92).

11. Transducer of claim 10, wherein the first member (631, 632) comprises an optical fibre (63), wherein the seismic mass (62, 72, 92) is suspended from the mount (61, 71, 91) by the optical fibre (63).

12. Transducer (20, 60, 70, 90) of any one of the preceding claims, comprising a sensing means (252) for sensing a motion of the seismic mass (22, 62, 72, 92) relative to the mount (21, 61, 71, 91) along the sensing axis (224).

13. Transducer of claim 12, wherein the sensing means comprises an optical fibre (25, 63), the optical fibre comprising optical strain detection means, such as a fibre Bragg grating (252).

14. Transducer (60, 70, 90) of claim 13, wherein the first member (631, 632) comprises the optical fibre (63), wherein the seismic mass (62, 72, 92) is suspended from the mount (61, 71, 91) by the optical fibre, wherein the optical strain detection means is configured to provide a change in a detectable optical property responsive to a change in relative position between the seismic mass and the mount, e.g. the fibre Bragg grating (252) is interposed between the seismic mass and the mount.

15. Transducer of any one of the preceding claims, wherein the transducer is an accelerometer configured for measuring vibrations having a frequency smaller than a natural frequency of the mass-spring system.

**FIG 1**

**FIG 2**

**FIG 3**

**FIG 4**

**FIG 5 A**

**FIG 5 B**

**FIG 6**

**FIG 7**

**FIG 8**

**FIG 9**

FIG 10

**FIG 11**

**FIG 12**

**FIG 13**

**FIG 14**

Europäisches
Patentamt

European
Patent Office

Office européen
des brevets

# EUROPEAN SEARCH REPORT

Application Number

EP 15 19 6716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2 788 512 A (REICHERT WILHELMUS J) 9 April 1957 (1957-04-09) * the whole document * | 1-15 | INV. G01H9/00 G01P15/02 G01V1/18 |
| A | US 4 322 829 A (DAVIS JR CHARLES M ET AL) 30 March 1982 (1982-03-30) * abstract; figure 1 * | 1-15 | |
| A,D | US 2006/236762 A1 (MEYER A D [US]) 26 October 2006 (2006-10-26) * abstract; figure 1 * | 1-15 | |
| A | DE 100 12 960 A1 (BOSCH GMBH ROBERT [DE]) 20 September 2001 (2001-09-20) * abstract; figure 1 * | 1-15 | |
| A | US 2 562 983 A (CLEWELL DAYTON H) 7 August 1951 (1951-08-07) * figure 1 * | 1-15 | |
| A | US 2 751 573 A (MILLINGTON JOHN W) 19 June 1956 (1956-06-19) * column 2, line 32 - column 3, line 2; figures 1,2,4 * | 1-15 | TECHNICAL FIELDS SEARCHED (IPC) G01H G01P G01V |

The present search report has been drawn up for all claims

| Place of search | Date of completion of the search | Examiner |
|---|---|---|
| The Hague | 20 June 2016 | Gilow, Christoph |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 19 6716

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2016

| Patent document cited in search report | | Publication date | Patent family member(s) | | Publication date |
|---|---|---|---|---|---|
| US 2788512 | A | 09-04-1957 | NONE | | |
| US 4322829 | A | 30-03-1982 | NONE | | |
| US 2006236762 | A1 | 26-10-2006 | CA | 2605372 A1 | 02-11-2006 |
| | | | GB | 2440298 A | 23-01-2008 |
| | | | JP | 2008538607 A | 30-10-2008 |
| | | | US | 2006236762 A1 | 26-10-2006 |
| | | | WO | 2006115511 A1 | 02-11-2006 |
| DE 10012960 | A1 | 20-09-2001 | DE | 10012960 A1 | 20-09-2001 |
| | | | EP | 1266229 A1 | 18-12-2002 |
| | | | JP | 2003527247 A | 16-09-2003 |
| | | | US | 2003101818 A1 | 05-06-2003 |
| | | | WO | 0169267 A1 | 20-09-2001 |
| US 2562983 | A | 07-08-1951 | NONE | | |
| US 2751573 | A | 19-06-1956 | NONE | | |

EPO FORM P0459

For more details about this annex : see Official Journal of the European Patent Office, No. 12/82

## REFERENCES CITED IN THE DESCRIPTION

### Patent documents cited in the description

- US 20060236762 A, Meyer

- WO 2012109502 A

### Non-patent literature cited in the description

- **BASUMALLICK N. et al.** Fiber Bragg grating accelerometer with enhanced sensitivity. *Sensors and Actuators A,* 2012, vol. 173, 108-115